# EUROPEAN PATENT SPECIFICATION

(11) **EP 3 537 329 B1**
(45) Date of publication and mention of the grant of the patent: **16.09.2020**
(21) Application number: 17880135.3
(22) Date of filing: 14.12.2017
(51) Int. Cl.: G06F 21/77, G06F 21/62, H04W 12/08, H04W 12/00

(54) **ACCESS CONTROL METHOD AND SYSTEM, ELECTRONIC DEVICE, AND COMPUTER STORAGE MEDIUM**
ZUGANGSKONTROLLVERFAHREN UND -SYSTEM, ELEKTRONISCHE VORRICHTUNG UND COMPUTERSPEICHERMEDIUM
SYSTÈME ET PROCÉDÉ DE COMMANDE D'ACCÈS, DISPOSITIF ÉLECTRONIQUE ET SUPPORT DE STOCKAGE INFORMATIQUE

(30) Priority: 15.12.2016 CN 201611161153
(43) Date of publication of application: 11.09.2019
(73) Proprietor: China Mobile Communication Co., Ltd Research Institute, Beijing 100053 (CN); China Mobile Communications Group Co., Ltd., Beijing 100032 (CN)
(72) Inventor: YUE, Zuhui, Beijing 100053 (CN); ZHU, Benhao, Beijing 100053 (CN); LI, Zheng, Beijing 100053 (CN)
(74) Representative: J A Kemp LLP
(86) International application number: PCT/CN2017/116238
(87) International publication number: WO 2018/108132

(56) References cited:
- WO-A1-2015/136200
- CN-A- 104 185 179
- CN-A- 104 185 179
- CN-A- 106 102 038
- US-A1- 2014 038 563
- US-A1- 2014 329 502
- US-A1- 2015 349 826
- Gsm Association: "SGP.22 - RSP Technical Specification (Remote SIM Provisioning) v1.1", , 9 June 2016 (2016-06-09), pages 1-125, XP055347670, Retrieved from the Internet: URL:http://www.gsma.com/newsroom/wp-conten t/uploads//SGP.22_v1.1.pdf [retrieved on 2017-02-20]

## Description

### TECHNICAL FIELD

The invention relates to a security technology in the communication field, and in particular to an access control method and system, an electronic device, and a computer storage medium.

### BACKGROUND

The initial demand for an embedded Universal Integrated Circuit Card (eUICC) is originated from the internet-of-things field (particularly the vehicle industry) (i.e., an embedded Subscriber Identification Module (eSIM) card). However, along with an increased demand for the eUICC, the eUICC may further be applied to the personal field, and may be, for example, applied to the wearable field. The demand for the eUICC is also changed to dynamically download a profile, switch between different profiles and the like.

At present, international organizations such as the Global System for Mobile Communications Alliance (GSMA) and European Telecommunication Standards Institute (ETSI) are trying to formulate eUICC relevant standards. Regarding the eUICC relevant standards in the personal field, in a related technical architecture, a Local Profile Assistant (LPA) function is integrated by a manufacturer into an Operation System (OS) of a device, so that a profile operation interface is provided for a subscriber and a Subscription Manager-Data Preparation + (SM-DP+) is connected with the eUICC to download and manage the profile.

Nevertheless, the integration of the LPA to the OS has the following defects.
(1) In response to an upgradation of the LPA function, the subscriber needs to update the OS of the device.
(2) The operator needs to adapt LPAs for different terminal devices and functions of the LPAs are restricted.
(3) With the upgradation of the LPA, systems of the operators need to be modified, which have high difficulty in implementation.

Chinese patent publication number CN104185179A discloses a control apparatus for a subscriber identity module. The control apparatus comprises: a first receiving module, which is used for receiving a first profile operation request for requesting a first operation on a first target profile from a network side; a first determination module, which is used for determining whether execution of the first operation on the first target profile is allowed according to a control rule stored in the first target profile to obtain a determination result; and a first execution module, which is used for executing the first operation on the first target profile when the determination result indicates the execution of the first operation on the first target profile is allowed or, otherwise, for refusing to execute the first operation on the first target profile.

### SUMMARY

Embodiments of the invention provide an access control method and system, an electronic device, and a computer storage medium.

The technical solutions in the embodiments of the invention are implemented as follows.

An embodiment of the invention provides an access control method, which is applied to an electronic device and includes the following operations.

An LPA module located on an application layer of an electronic device receives a control instruction, where the control instruction is to indicate a control operation on a eUICC.

In response to the control instruction, the LPA module invokes an Application Programming Interface (API) of an OS of the electronic device to send information or command corresponding to the control instruction to the eUICC.

When the API of the OS is invoked, the OS determines, based on an access control rule, whether the LPA module has a permission to access the eUICC or not, and sends, in response to the determination that the LPA module has the permission to access the eUICC, the information or command corresponding to the control instruction to the eUICC so that the eUICC performs an operation based on the information or command.

In the above solution, the method may further include the following operation.

The OS acquires the access control rule from the eUICC and stores the access control rule.

In the above solutions, the operation that the OS acquires the access control rule from the eUICC may include the following actions.

The OS sends a read request to the eUICC.

The OS receives the access control rule returned from the eUICC.

In the above solutions, the method may further include the following operation.

After an Issuer Security Domain-Profile (ISD-P) corresponding to the LPA module is deactivated, the OS clears the stored access control rule.

In the above solutions, the method may further include the following operation.

When the access control rule stored by the eUICC is changed, the OS acquires a new access control rule from the eUICC, and updates the native stored access control rule.

In the above solutions, when an interaction between an SM-DP+ or a service platform and the eUICC is implemented via the electronic device, the LPA module receives the control instruction.

Before the API of the OS is invoked, the method may further include the following operation.

The LPA module acquires the information or command corresponding to the control instruction from the SM-DP+ or the service platform.

In the above solutions, the access control rule at least includes verification information for the LPA module, where the verification information is used for verifying whether the LPA module has the permission to access the eUICC or not.

In the above solutions, the access control rule may further include an access permission for the API.

Before in response to the determination that the LPA module has the permission to access the eUICC, the OS sends the information or command corresponding to the control instruction to the eUICC, the method may further include the following operation.

The OS determines whether the API invoked by the LPA module is allowed to be invoked or not by using the access permission for the API in the access control rule, and sends, in response to the determination that the API invoked by the LPA module is allowed to be invoked, the information or command corresponding to the control instruction to the eUICC.

An embodiment of the invention further provides an electronic device, which includes an LPA module and an OS module.

The LPA module located on an application layer of the electronic device is configured to: receive a control instruction, where the control instruction is to indicate a control operation on a eUICC; and invoke, in response to the control instruction, an API of the OS module to send information or command corresponding to the control instruction to the eUICC.

The OS module is configured to: determine, when the own API is invoked, based on an access control rule, whether the LPA module has a permission to access the eUICC or not, and send, in response to the determination that the LPA module has the permission to access the eUICC, the information or command corresponding to the control instruction to the eUICC, such that the eUICC performs an operation based on the information or command.

In the above solution, the OS module is further configured to acquire the access control rule from the eUICC and store the access control rule.

In the above solutions, the OS module is further configured to clear, after an ISD-P corresponding to the LPA module is deactivated, the stored access control rule.

In the above solutions, the OS module is further configured to acquire, when the access control rule stored by the eUICC is changed, a new access control rule from the eUICC, and update the native stored access control rule.

In the above solutions, when an interaction between an SM-DP+ or a service platform and the eUICC is implemented via the electronic device, the LPA module receives the control instruction.

The LPA module is further configured to acquire the information or command corresponding to the control instruction from the SM-DP+ or the service platform.

In the above solutions, the access control rule at least includes verification information for the LPA module, where the verification information is used for verifying whether the LPA module has the permission to access the eUICC or not.

In the above solutions, the access control rule may further include an access permission for the API. The OS module is further configured to: determine, in response to the determination that the LPA module has the permission to access the eUICC, whether the API invoked by the LPA module is allowed to be invoked or not by using the access permission for the API in the access control rule, and send, in response to the determination that the API invoked by the LPA module is allowed to be invoked, the information or command corresponding to the control instruction to the eUICC.

An embodiment of the invention further provides an access control system, which includes: an electronic device and a eUICC; and the electronic device includes: an LPA module and an OS module.

The LPA module located on an application layer of the electronic device is configured to: receive a control instruction, where the control instruction is to indicate a control operation on a eUICC; and invoke, in response to the control instruction, an API of the OS module to send information or command corresponding to the control instruction to the eUICC.

The OS module is configured to: determine, when the own API is invoked, based on an access control rule, whether the LPA module has a permission to access the eUICC or not, and send, in response to the determination that the LPA module has the permission to access the eUICC, the information or command corresponding to the control instruction to the eUICC.

The eUICC is configured to perform an operation based on the information or command.

In the above solutions, the OS module is further configured to acquire the access control rule from the eUICC and store the access control rule.

The eUICC is further configured to provide the access control rule for the OS module.

An embodiment of the invention further provides a computer storage medium having stored thereon a computer program; and the computer program implements the operations of the above any method when being executed by a processor.

According to the access control method and system, the electronic device and the computer storage medium provided by the embodiments of the invention, the LPA module located on the application layer of the electronic device receives the control instruction, where the control instruction is to indicate the control operation on the eUICC; in response to the control instruction, the LPA module invokes the API of the OS of the electronic device to send the information or command corresponding to the control instruction to the eUICC; when the API of the OS is invoked, the OS determines, based on the access control rule, whether the LPA module has the permission to access the eUICC or not, and sends, in response to the determination that the LPA module has the permission to access the eUICC, the information or command corresponding to the control instruction to the eUICC so that the eUICC performs the operation based on the information or command. Since the LPA module is located on the application layer of the electronic device and is completely separated from the OS, the solutions provided by the embodiments of the invention may be adapted to different electronic devices; and for the upgradation of the LPA module, a system of an operator does not need to be modified and the OS of the electronic device does not need to be upgraded; furthermore, by managing the permission of the LPA via the OS, the security operation on the eUICC may be implemented.

### BRIEF DESCRIPTION OF DRAWINGS

In the drawings (not unnecessarily drawn to scale), similar reference numerals may describe similar components in different views. Each embodiment discussed herein is illustrated in the accompanying drawings by way of example and not by way of limitation.
FIG. 1 illustrates a schematic diagram of a technical architecture for a eUICC relevant standard in a personal field in the related art.
FIG. 2 illustrates a flow diagram of an access control method at an electronic device side according to a first embodiment of the invention.
FIG. 3 illustrates a flow diagram of an access control method according to a first embodiment of the invention.
FIG. 4 illustrates a structural schematic diagram of an electronic device according to a second embodiment of the invention.
FIG. 5 illustrates a structural schematic diagram of an access control system according to a second embodiment of the invention.
FIG. 6 illustrates a structural schematic diagram of an access control system according to a third embodiment of the invention.
FIG. 7 illustrates a flow diagram showing a subscriber downloading a profile via a device application according to a third embodiment of the invention.
FIG. 8 illustrates a schematic diagram showing a subscriber performing interaction with a current activated ISD-P via a device application according to a third embodiment of the invention.
FIG. 9 illustrates a flow diagram showing a subscriber managing an ISD-P via a device application according to a third embodiment of the invention.

### DETAILED DESCRIPTION

The invention will be further described below in detail in combination with the accompanying drawings and embodiments.

Before the embodiments of the invention are described, the related art of the eUICC card will be described in detail firstly.

The initial demand for the eUICC is originated from the internet-of-things field (particularly the vehicle industry). It is stipulated in EU legislation that all models of family cars and light passenger cars sold within the EU as of April 2018 must be equipped with an eCall emergency call system (the system may be automatically/manually connected to a network in emergency to report position information of a subscriber, thereby giving an emergency aid conveniently). The system is designed based on a mobile network and needs to equip a Universal Integrated Circuit Card (UICC) (i.e., a Subscriber Identification Module (SIM) card) in each vehicle. Considering the safety, a vehicle manufacturer does not expect the subscribers to replace the UICC by themselves. Therefore, there is a need to embed the UICC (i.e., eUICC) into a vehicle to sell uniformly.

However, a new problem arises: it is possible that a place of production and a place of final sales for a vehicle may be inconsistent; if a code number is preset, high roaming cost will be caused; and moreover, the permanent roaming is not supported in some places. Therefore, the requirement of dynamically downloading a formal code number is generated.

Along with a development of technologies and services, and a constantly deepened discussion on the requirement, the eSIM card should have the function of having an independent hardware carrier, dynamically uploading a profile and switching between profiles of different operators. Meanwhile, the eUICC has been expanded to the personal field (such as wristwatch, mobile phone, tablet, etc.).

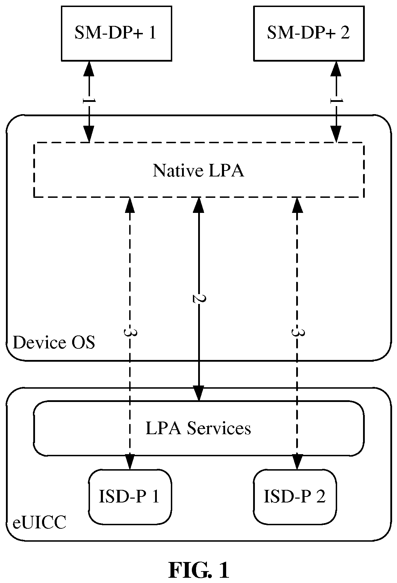

At present, the international organizations such as the GSMA and ETSI are trying to formulate eUICC relevant standards. FIG. 1 illustrates an existing technical architecture for a eUICC relevant standard in a personal field. As illustrated in FIG. 1, in the related technical architecture, an LPA function is integrated by a manufacturer to an OS of a device, so that a profile operation interface is provided for a subscriber and the SM-DP+ is connected with the eUICC to download and manage the profile. The LPA is communicated with an LPA service module on the eUICC via a local interface to create, activate/deactivate and delete the profile.

In FIG. 1, the profile of an operator is present as an ISD-P on the eUICC, different operators (SM-DP+) correspond to different ISD-Ps on the card and the ISD-Ps are isolated safely from each other.

From the above description, it may be seen that the LPA is integrated to the OS, and with such a manner, the following problems will be encountered.
(1) In response to the upgradation of the LPA function, the subscriber needs to update the OS of the device.
(2) The operator needs to adapt LPAs of different terminal devices and the functions of the LPAs are restricted.
(3) With the upgradation of the LPA, the systems of the operators need to be modified, which have high difficulty in implementation (for the LPAs provided by different manufacturers, when the function of the LPA is extended, it is possible that a background system of the operator needs to be adaptively upgraded; and in face of numerous terminal manufacturers, the work on the adaptive upgradation is huge).

In view of this, in various embodiments of the invention, an LPA module located on an application layer of an electronic device receives a control instruction, where the control instruction is to indicate a control operation on a eUICC; in response to the control instruction, the LPA module invokes an API of an OS of the electronic device to send information or command corresponding to the control instruction to the eUICC; and when the API of the OS is invoked, the OS determines, based on an access control rule, whether the LPA module has a permission to access the eUICC or not, and sends, in response to the determination that the LPA module has the permission to access the eUICC, the information or command to the eUICC so that the eUICC performs an operation based on the information or command.

### First embodiment

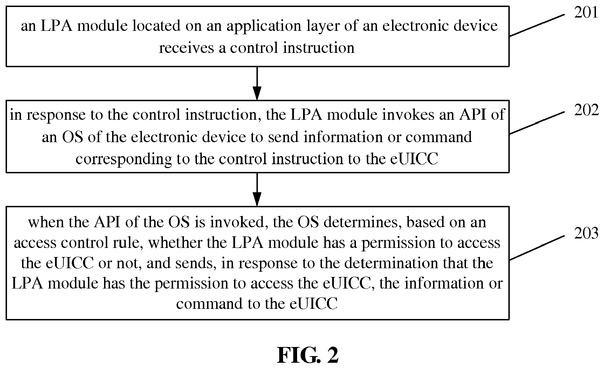

An access control method according to this embodiment of the invention is applied to an electronic device. The electronic device may be a wearable device, a mobile phone, a tablet and the like. As illustrated in FIG. 2, the method may include the following operations.

At 201: an LPA module located on an application layer of an electronic device receives a control instruction.

Herein, the control instruction is used for indicating a control operation to be performed on a eUICC.

In practical applications, the control instruction may be a control instruction sent when the subscriber performs related operations such as activation/deactivation operation and deletion operation on an ISD-P in the eUICC. The control instruction may also be a control instruction sent when the subscriber implements interaction between an SM-DP+ or a service platform and the eUICC via the electronic device (LPA module), for example, when the subscriber implements the interaction between the SM-DP+ and the eUICC in a profile downloading process via the LPA module, and also for example, when the subscriber implements the interaction between the SM-DP+ or the service platform and a profile of a current activated ISD-P on the eUICC via the LPA module.

At 202: in response to the control instruction, the LPA module invokes an API of an OS of the electronic device to send information or command corresponding to the control instruction to the eUICC.

In practical applications, when the interaction between the SM-DP+ or the service platform and the eUICC is implemented via the electronic device, the LPA module receives the control instruction. Before the API of the OS is invoked, the method may further include the following operation.

The LPA module acquires the information or command corresponding to the control instruction from the SM-DP+ or the service platform.

At 203: when the API of the OS is invoked, the OS determines, based on an access control rule, whether the LPA module has a permission to access the eUICC or not, and sends, in response to the determination that the LPA module has the permission to access the eUICC, the information or command to the eUICC so that the eUICC performs an operation based on the information or command.

Herein, in practical applications, the OS needs to acquire the access control rule from the eUICC and store the access control rule first.

Specifically, the OS sends a read request to the eUICC.

The OS receives the access control rule returned from the eUICC.

When the ISD-P (located on the eUICC) corresponding to the LPA module is deactivated, the OS needs to clear the stored access control rule to guarantee a security access to the eUICC.

In addition, when the access control rule stored by the eUICC is changed (the access control rule is added, deleted or modified, etc.), the OS acquires a new access control rule from the eUICC and updates the stored access control rule, to guarantee the security access to the eUICC.

Herein, in practical applications, the access control rule stored by the eUICC may be updated (including that the access control rule is added, deleted or modified, etc.) by a background (it may be a background of an operator, a device manufacturer, a card issuer or a third party) via an Over The Air (OTA)/On The Internet (OTI) manner.

Correspondingly, when the access control rule stored by the eUICC is changed, the eUICC may actively notify the OS. Certainly, the OS may also know in a polling manner that the access control rule stored by the eUICC is changed.

In practical applications, the access control rule at least includes verification information for the LPA module, where the verification information is used for verifying whether the LPA module has the permission to access the eUICC or not. For example, the verification information is a hash valve of a signature certificate of the LPA module and the like. Certainly, the access control rule may further include an identifier (mask) indicating whether an API is allowed to be invoked or not, for example, 1 may be set to indicate that a corresponding API may be invoked as long as the permission verification is passed, and 0 may indicate that a corresponding API cannot be invoked even though the permission verification is passed.

In practical applications, according to different control instructions received by the LPA module, the LPA module may be set to invoke different APIs. For example, a first API is invoked in an ISD-P creation process; and when a created ISD-P is operated, a second API is invoked and so on.

In one embodiment, the access control rule may further include: an access permission for the API. Correspondingly, before in response to the determination that the LPA module has the permission to access the eUICC, the OS sends the information or command to the eUICC, the method may further include the following operation.

The OS determines whether the API invoked by the LPA module is allowed to be invoked or not by using the access permission for the API in the access control rule, and sends, in response to the determination that the API invoked by the LPA module is allowed to be invoked, the information or command corresponding to the control instruction to the eUICC.

As can be seen from the above description, in order to implement the method provided by the embodiment of the invention, the access control rule needs to be set in advance at a eUICC side.

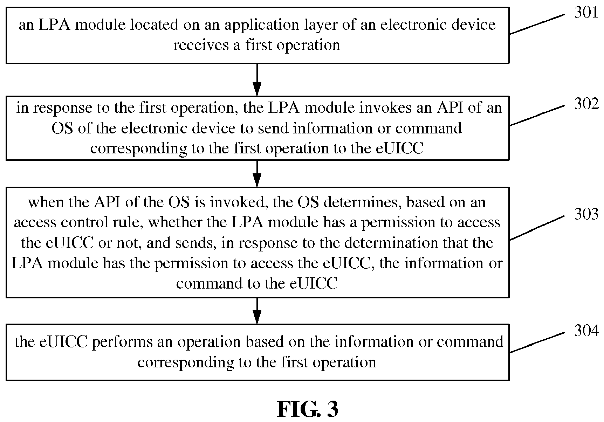

An embodiment of the invention further provides an access control method. As illustrated in FIG. 3, the method may include the following operations.

At 301: an LPA module located on an application layer of an electronic device receives a control instruction.

Herein, the control instruction is to indicate a control operation on a eUICC.

At 302: in response to the control instruction, the LPA module invokes an API of an OS of the electronic device to send information or command corresponding to the control instruction to the eUICC.

At 303: when the API of the OS is invoked, the OS determines, based on an access control rule, whether the LPA module has a permission to access the eUICC or not, and sends, in response to the determination that the LPA module has the permission to access the eUICC, the information or command to the eUICC.

At 304: the eUICC performs an operation based on the information or command.

It is to be noted that the specific processing procedures of the LPA module, the OS and the eUICC have been detailed above and will not be repeated herein.

According to the access control method provided by this embodiment of the invention, the LPA module located on the application layer of the electronic device receives the control instruction, where the control instruction is to indicate the control operation on the eUICC; in response to the control instruction, the LPA module invokes the API of the OS of the electronic device to send the information or command corresponding to the control instruction to the eUICC; when the API of the OS is invoked, the OS determines, based on the access control rule, whether the LPA module has the permission to access the eUICC or not, and sends, in response to the determination that the LPA module has the permission to access the eUICC, the information or command to the eUICC so that the eUICC performs the operation based on the information or command. Since the LPA module is located on the application layer of the electronic device and is completely separated from the OS, the solutions provided by the embodiments of the invention may be adapted to different electronic devices; and for the upgradation of the LPA module, a system of an operator does not need to be modified and the OS of the electronic device also does not need to be upgraded. Furthermore, by managing the permission of the LPA via the OS, the security operation on the eUICC may be implemented.

### Second embodiment

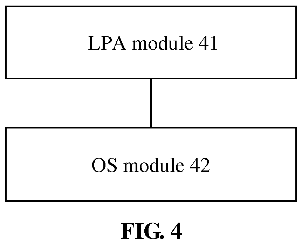

In order to implement the method in the above embodiment of the invention, this embodiment provides an electronic device. The electronic device may be a wearable device, a mobile phone, a tablet and the like. As illustrated in FIG. 4, the electronic device may include an LPA module 41 and an OS module 42.

The LPA module 41 located on an application layer of the electronic device is configured to receive a control instruction, where the control instruction is to indicate a control operation on a eUICC; and invoke, in response to the control instruction, an API of the OS module 42 so as to send information or command corresponding to the control instruction to the eUICC.

The OS module 42 is configured to determine, when its own API is invoked, based on an access control rule, whether the LPA module 41 has a permission to access the eUICC or not, and send, in response to the determination that the LPA module 41 has the permission to access the eUICC, the information or command to the eUICC so that the eUICC performs an operation based on the information or command.

In practical applications, the control instruction may be a control instruction sent when the subscriber performs operations such as activation/deactivation operation and deletion operation on an ISD-P in the eUICC. The control instruction may further be a control instruction sent when the subscriber implements interaction between an SM-DP+ or a service platform and the eUICC via the electronic device (LPA module 41), for example, when the subscriber implements the interaction between the SM-DP+ and the eUICC in a profile downloading process via the LPA module 41, and also for example, when the subscriber implements the interaction between the SM-DP+ or the service platform and a profile of a current activated ISD-P on the eUICC via the LPA module 41.

Herein, in practical applications, when the interaction between an SM-DP+ or a service platform and the eUICC is implemented via the electronic device, the LPA module 41 receives the control instruction.

The LPA module 41 is further configured to acquire the information or command corresponding to the control instruction from the SM-DP+ or the service platform.

In one embodiment, the OS module 42 is further configured to acquire the access control rule from the eUICC and store the access control rule.

Specifically, the OS module 42 sends a read request to the eUICC.

The OS module 42 receives the access control rule returned from the eUICC.

When the ISD-P (located on the eUICC) corresponding to the LPA module 41 is deactivated, the OS module 42 needs to clear the stored access control rule to guarantee a security access to the eUICC.

In addition, when the access control rule stored by the eUICC is changed (the access control rule is added, deleted or modified, etc.), the OS module 42 needs to acquire a new access control rule from the eUICC, and update the locally stored access control rule to guarantee the security access to the eUICC.

Herein, in practical applications, the access control rule stored by the eUICC may be updated (including that the access control rule is added, deleted or modified, etc.) by a background (it may be a background of an operator, a device manufacturer, a card issuer or a third party) via an OTA/OTI manner.

Correspondingly, when the access control rule stored by the eUICC is changed, the eUICC may actively notify the OS module 42. Certainly, the OS module 42 may also know in a polling manner that the access control rule stored by the eUICC is changed.

In practical applications, the access control rule at least includes verification information for the LPA module, where the verification information is used for verifying whether the LPA module 41 has the permission to access the eUICC or not. For example, the verification information is a hash valve of a signature certificate of the LPA module 41 and the like. Certainly, the access control rule may further include an identifier (mask) indicating whether an API is allowed to be invoked or not. For example, 1 may be set to indicate that a corresponding API may be invoked as long as the permission verification is passed, and 0 may indicate that a corresponding API cannot be invoked even though the permission verification is passed.

In practical applications, according to different control instructions received by the LPA module, the LPA module may be set to invoke different APIs. For example, a first API is invoked in an ISD-P creation process; and when a created ISD-P is operated, a second API is invoked.

In one embodiment, the access control rule may further include: an access permission for the API. The OS module 42 is further configured to: determine, in response to the determination that the LPA module has the permission to access the eUICC, whether the API invoked by the LPA module 41 is allowed to be invoked or not by using the access permission for the API in the access control rule, and send, in response to the determination that the API invoked by the LPA module 41 is allowed to be invoked, the information or command to the eUICC.

As can be seen from the above description, in order to implement the method provided by this embodiment of the invention, the access control rule needs to be set in advance at the eUICC side.

In practical applications, the LPA module 41 and the OS module may be implemented by a controller in the electronic device.

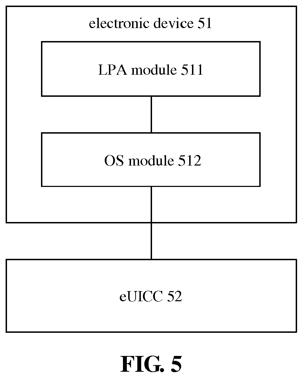

In order to implement the method in the above embodiment of the invention, this embodiment further provides an access control system. As illustrated in FIG. 5, the system may include an electronic device 51 and a eUICC 52.

The electronic device may include an LPA module 511 and an OS module 512.

The LPA module 511 located on an application layer of the electronic device is configured to receive a control instruction, where the control instruction is to indicate a control operation on the eUICC 52; and invoke, in response to the control instruction, an API of the OS module 512 so as to send information or command corresponding to the control instruction to the eUICC 52.

The OS module 512 is configured to determine, when its own API is invoked, based on an access control rule, whether the LPA module has a permission to access the eUICC 52 or not, and send, in response to the determination that the LPA module 511 has the permission to access the eUICC, the information or command to the eUICC 52.

The eUICC 52 is configured to perform an operation based on the information or command.

The OS module 512 is further configured to acquire the access control rule from the eUICC 52 and store the access control rule.

The eUICC 52 is further configured to provide the access control rule for the OS module 512.

The specific processing procedures of the LPA module 511 and the OS module 512 have been detailed above and will not be repeated herein.

According to the solutions provided by this embodiment of the invention, the LPA module located on the application layer of the electronic device receives the control instruction, where the control instruction is to indicate the control operation on the eUICC; in response to the control instruction, the LPA module invokes the API of the OS module of the electronic device to send the information or command corresponding to the control instruction to the eUICC; when the API of the OS module is invoked, the OS module determines, based on the access control rule, whether the LPA module has the permission to access the eUICC or not, and sends, in response to the determination that the LPA module has the permission to access the eUICC, the information or command to the eUICC so that the eUICC performs the operation based on the information or command. Since the LPA module is located on the application layer of the electronic device and is completely separated from the OS, the solutions provided by the embodiments of the invention may be adapted to different electronic devices; and for the upgradation of the LPA module, a system of an operator does not need to be modified and the OS of the electronic device does not need to be upgraded. Furthermore, by managing the permission of the LPA via the OS, the security operation on the eUICC may be implemented.

### Third embodiment

On the basis of the first and second embodiments, an architecture and a function of each module as well as an interaction process between modules in the embodiments of the invention will be described in detail in this embodiment.

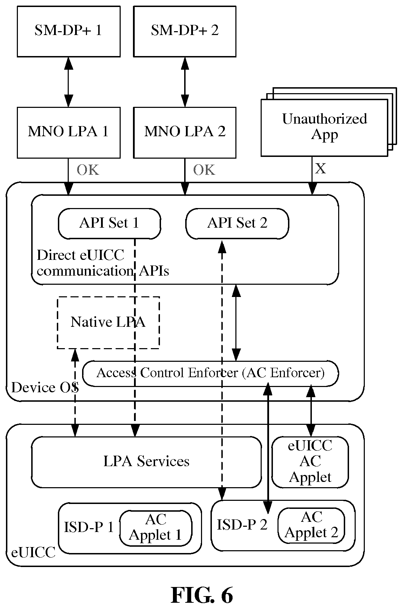

FIG. 6 illustrates a structural schematic diagram of an access control system according to a third embodiment of the invention. It may be seen from FIG. 6 that compared with the system shown in FIG. 1, the following modules are added in the embodiments of the invention.
(1) Two sets of APIs are added in the OS of the electronic device.
   As illustrated in FIG. 6, the two sets of APIs added are respectively an API Set 1 and an API Set 2, where the API Set 1 is mainly in charge of creation and deletion of an ISD-P, and the API Set 2 is mainly in charge of accessing an application in an ISD-P, such as sending various Application Protocol Data Unit (APDU) commands.
(2) A eUICC AC Applet (an application program compiled with a Java programming language; in practical applications, according to the Device OS, an application program compiled with other languages may also be adopted) is added on the eUICC. The eUICC AC Applet is an Access Control application. The AC Applet is configured to control a permission of an application on the electronic device to access the API Set 1, that is, store an access control rule for the API Set 1.
(3) An AC Applet is added to the created ISD-P, which is also an Access Control application. The Applet is configured to control a permission of an application on the electronic device to access the API Set 2, that is, store an access control rule for the API Set 2.
(4) An Access Control Enforcer (AC Enforcer) is added to the Device OS. The AC Enforcer is configured to upload access control rules stored by the AC Applets in the eUICC and the current activated ISD-P.
(5) An MNO LPA of an operator (certainly, in practical applications, it may also be an LPA of a third party) is present in the form of a device application, provides an operation interface for a subscriber, connects the SM-DP+ and the eUICC to implement security communication and implement the operation of the subscriber on the eUICC.

Concerning the AC Applet, there are the following setting requirements.

The eUICC and the ISD-P are respectively provided with one AC Applet, namely an eUICC AC Applet and an ISD-P AC Applet respectively.

Herein, each AC Applet stores the access control rule (one or more access control rules), and each rule includes a hash value (affirmatively chosen item) of a signature certificate of a device application (MNO LPA or the LPA of the third party) and a name/ID (optional item) of the device application. Besides, in each rule, a mask may be set to indicate whether an API is allowed to be invoked or not, for example, 1 may indicate that a corresponding API may be invoked as long as the permission verification is passed, and 0 may indicate that a corresponding API cannot be invoked even though the permission verification is passed.

The Native LPA is configured to implement activation/deactivation, deletion and other operations of the ISD-P. At any moment, at most one ISD-P on the eUICC is in an activated state.

The update mechanism in the AC Enforcer for the access control rule stored by the eUICC AC Applet is as follows.

Firstly, when the device is powered on, the AC Enforcer uploads an access control rule stored in the eUICC AC Applet (the AC Enforcer reads the access control rule from the eUICC AC Applet and stores the access control rule).

Then, when the access control rule stored in the eUICC AC Applet is changed (such as the access control rule is added, deleted or modified), the AC Enforcer updates the stored access control rule.

The update mechanism in the AC Enforcer for the access control rule stored by the ISD-P AC Applet is as follows.

Firstly, when the device is powered on, an access control rule stored in an ISD-P AC Applet corresponding to an ISD-P in an activated state at present is uploaded.

Secondly, when the access control rule stored in the ISD-P AC Applet in the activated state at present is changed (such as the access control rule is added, deleted or modified, etc.), the AC Enforcer updates the stored access control rule.

Thirdly, when the ISD-P is deactivated, the stored access control rule corresponding to the ISD-P is cleared.

Fourthly, when another ISD-P is activated, an access control rule stored in the activated ISD-P AC Applet is reloaded.

The operations on the eUICC will be described below in detail.

First of all, the operations of interaction between the SM-DP+ and the eUICC in the profile downloading process by the subscriber via the MNO is described.

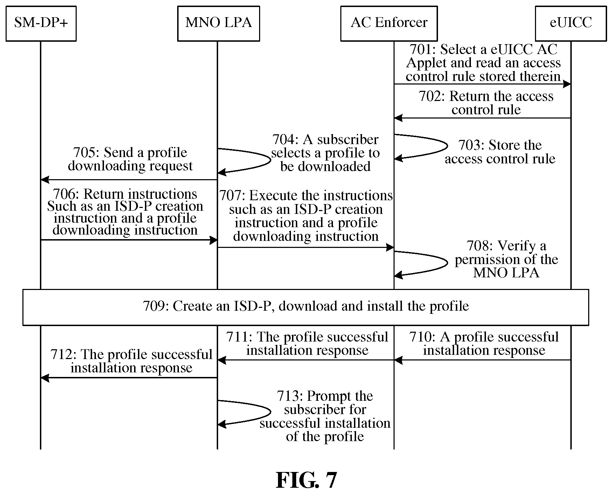

As illustrated in FIG. 7, the process may include the following operations.

At 701: the AC Enforcer selects a eUICC AC Applet and reads an access control rule stored therein.

Herein, in practical applications, when there is no activated ISD-P on the eUICC, after the device is powered on, the AC Enforcer selects the eUICC AC Applet and reads the access control rule stored therein.

At 702: the eUICC AC Applet returns its own stored access control rule to the AC Enforcer.

At 703: after the reception of the access control rule, the AC Enforcer stores the access control rule.

At 704: a subscriber selects a profile to be downloaded via an MNO LPA.

At 705: in response to the reception of selection of the profile by the subscriber, the MNO LPA sends a profile downloading request to the SM-DP+.

At 706: in response to the reception of the request, the SM-DP+ returns instructions such as an ISD-P creation instruction and a profile downloading/installation instruction to the MNO LPA according to request information.

Herein, in practical applications, an ISD-P needs to be created on the eUICC first and then a profile is installed in the ISD-P. Accordingly, the instructions include a creation instruction, an installation instruction, etc.

At 707: in response to the reception of the instructions, the MNO LPA invokes an API in the API Set 1.

At 708: after knowing that the API in the API Set 1 is invoked, the AC Enforcer verifies, according to the stored access control rule, whether the MNO LPA has a permission to access the API Set 1 or not, and transmits, in response to the determination that the MNO LPA has a related access permission, the instructions such as the ISD-P creation instruction and the profile downloading/installation instruction to the eUICC transparently.

Herein, when the verification is not passed, corresponding error information is returned to the MNO LPA.

At 709: the MNO LPA creates the ISD-P and downloads/installs the profile by interacting with the SM-DP+ and the eUICC.

At 710: in response to the completion of the installation, the eUICC returns a profile successful installation response to the AC Enforcer.

Herein, in the case of an error during installation, error information is returned and the process is ended.

At 711: the AC Enforcer returns the profile successful installation response to the MNO LPA.

At 712: the MNO LPA returns the profile successful installation response to the SM-DP+.

At 713: the MNO LPA prompts the subscriber for successful installation of the profile.

Next, the operations of the interaction, implemented by the subscriber via the MNO LPA, between the SM-DP+ or the service platform and the profile of the current activated ISD-P on the eUICC is described.

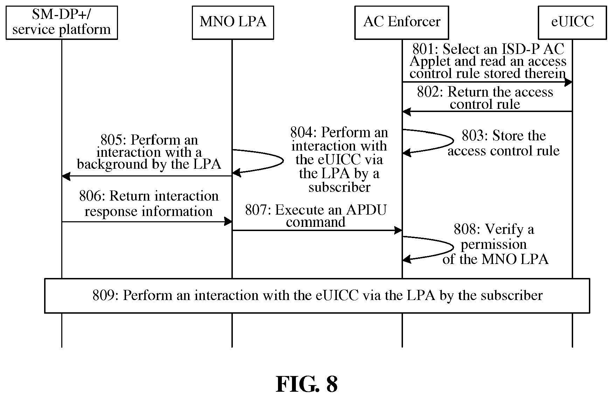

As illustrated in FIG. 8, the process may include the following operations.

At 801: the AC Enforcer selects the ISD-P AC Applet in the current activated ISD-P and reads an access control rule stored therein.

Herein, after the profile is installed successfully and the ISD-P is activated, the AC Enforcer may read the stored access control rule from the ISD-P AC Applet in the current activated ISD-P.

At 802: the ISD-P AC Applet in the current activated ISD-P returns the access control rule to the AC Enforcer.

At 803: in response to the reception of the access control rule, the AC Enforcer stores the access control rule.

At 804: a subscriber performs an operation via the MNO LPA, where the operation involves the interaction between the SM-DP+ or the service platform and the eUICC.

At 805: the MNO LPA sends an interaction request to the SM-DP+ or the service platform.

At 806: the SM-DP+ or the service platform returns response information according to request information.

Herein, the response information may be an APDU instruction, etc.

At 807: in response to the reception of the response information, the MNO LPA invokes an API in the API Set 2.

At 808: after knowing that the API in the API Set 2 is invoked, the AC Enforcer verifies, according to the stored access control rule, whether the MNO LPA has a permission to access the API Set 2 or not, and transmits, in response to the determination that the MNO LPA has a related access permission, the response information to the eUICC transparently.

Herein, when the verification is not passed, corresponding error information is returned to the MNO LPA.

At 809: the MNO LPA executes various instructions via the interaction with the SM-DP+ or the service platform and the eUICC.

Thirdly, operations on activation, deactivation and deletion of an ISD-P will be described.

When the access control rule stored in the eUICC AC Applet allows the MNO LPA to activate/deactivate and delete an ISD-P (which may be implemented by setting a mask corresponding to a API as 1), a subscriber may activate, deactivate and delete the ISD-P on the eUICC via the MNO LPA (it may be perceptible to the subscriber that the operation is executed for the profile).

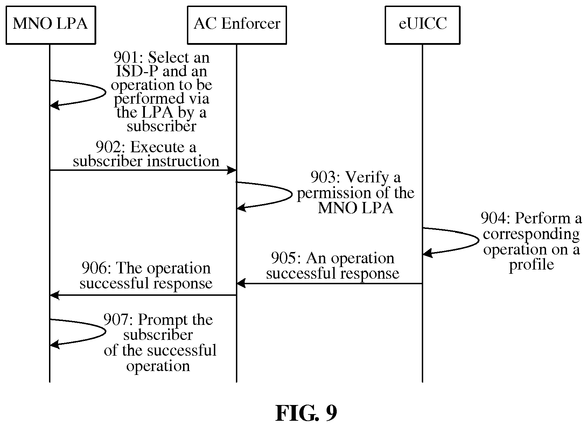

Specifically, as illustrated in FIG. 9, the process may include the following operations.

At 901: a subscriber selects an ISD-P to be operated and an operation to be performed via an operation interface provided by the MNO PLA.

Herein, the operation may be an activation operation, a deactivation operation, a deletion operation and the like.

At 902: in response to the reception of an instruction from the subscriber, the MNO LPA invokes an API in the API Set 1.

At 903: after knowing that the API in the API Set 1 is invoked, the AC Enforcer verifies, according to the stored access control rule, whether the MNO LPA has a permission to access the API Set 1 or not (permission verification on the operation selected by the subscriber), and transmits, in response to the determination that the MNO LPA has a related access permission, the instruction to the eUICC transparently.

Herein, when the verification is not passed, corresponding error information is returned to the MNO LPA.

At 904: an LPS Services performs an operation corresponding to the instruction on a profile in the corresponding ISD-P on the eUICC according to the instruction.

At 905: after the completion of the operation, the LPS Services returns an operation successful response to the AC Enforcer.

Herein, in the case of an error during operation, error information is returned and the process is ended.

At 906: the AC Enforcer returns the operation successful response to the MNO LPA.

At 907: the MNO LPA prompts the subscriber of the successful operation.

It may be seen from the above description that with the solutions provided by the embodiments of the invention, the problem that the LPA must be built in the OS of the device is solved firstly; secondly, the problem that the security access of the MNO LPA to the eUICC that needs to be considered when the LPA is not built in the OS of the device is solved by controlling the access permission of the MNO LPA via the OS; and thirdly, by controlling the access permission of the MNO LPA via the OS, the problem of functional openness of the ISD-P to the MNO LPA is further solved.

Therefore, when the solutions in the embodiments of the invention are adopted, the following beneficial effects may be achieved.
1) Since the LPA is located on the application layer of the electronic device, the LPA may be designed by the operator independently and may be present in the form of an App, so that different terminal devices may be adapted.
2) By controlling the access permission of the MNO LPA via the OS, the MNO LPA may completely control a life cycle of a ISD-P to which the MNO LPA belongs without affecting life cycles of other ISD-Ps.
3) By controlling the access permission of the MNO LPA via the OS, the MNO LPA may freely access an application in the ISD-P to which the MNO LPA belongs, and cannot access content in other ISD-Ps without authorization.

A person skilled in the art should understand that the embodiments of the invention may be provided as a method, system or computer program product. Therefore, the invention may use a form of hardware embodiments, software embodiments, or embodiments with a combination of software and hardware. Moreover, the invention may use a form of a computer program product that is implemented on one or more computer-usable storage media (including but not limited to a disk memory, an optical memory, and the like) that include a computer-usable program code.

The invention is described with reference to the flowcharts and/or block diagrams of the method, the device (system), and the computer program product according to the embodiments of the invention. It should be understood that computer program instructions may be used to implement each process and/or each block in the flowcharts and/or the block diagrams and a combination of processes and/or blocks in the flowcharts and/or the block diagrams. These computer program instructions may be provided to a processor of a general-purpose computer, a dedicated computer, an embedded processor, or any other programmable data processing device to generate a machine, so that the instructions executed by a processor of a computer or any other programmable data processing device generate an apparatus for implementing function(s) specified in one or more processes in the flowcharts and/or in one or more blocks in the block diagrams.

These computer program instructions may be stored in a computer readable memory that can instruct the computer or any other programmable data processing device to work in a specific manner so that the instructions stored in the computer readable memory generate an artifact that includes an instruction apparatus. The instruction apparatus implements functions specified in one or more processes in the flowcharts and/or in one or more blocks in the block diagrams.

These computer program instructions may be loaded onto a computer or another programmable data processing device so that a series of operations and steps are performed on the computer or other programmable devices, thereby generating computer-implemented processing. Therefore, the instructions executed on the computer or other programmable devices provide steps for implementing a function in one or more processes in the flowcharts and/or in one or more blocks in the block diagrams.

In view of this, an embodiment of the invention provides a computer storage medium, which specifically is a computer readable storage medium and stores thereon a computer program. The computer program implements the steps of the method in the embodiment of the invention when being executed by a processor.

The above are only preferred embodiments of the invention and are not intended to limit a scope of protection of the invention.

### INDUSTRIAL APPLICABILITY

According to the solutions provided by the embodiments of the invention, the LPA module located on the application layer of the electronic device receives the control instruction, where the control instruction is to indicate the control operation on the eUICC; in response to the control instruction, the LPA module invokes the API of the OS of the electronic device to send the information or command corresponding to the control instruction to the eUICC; when the API of the OS is invoked, the OS determines, based on the access control rule, whether the LPA module has the permission to access the eUICC or not, and sends, in response to the determination that the LPA module has the permission to access the eUICC, the information or command to the eUICC so that the eUICC performs the operation based on the information or command. Since the LPA module is located on the application layer of the electronic device and is completely separated from the OS, the solutions provided by the embodiments of the invention may be adapted to different electronic devices; and for the upgradation of the LPA module, a system of an operator does not need to be modified and the OS of the electronic device also does not need to be upgraded; furthermore, by managing the permission of the LPA via the OS, the security operation on the eUICC may be implemented.

## Claims

1. An access control method, applied to an electronic device, comprising:
receiving (201), by a Local Profile Assistant, LPA, module located on an application layer of the electronic device, a control instruction, wherein the control instruction is to indicate a control operation on an embedded Universal Integrated Circuit Card, eUICC;
invoking (202), by the LPA module, in response to the control instruction, an Application Programming Interface, API, of an Operation System, OS, of the electronic device to send information or command corresponding to the control instruction to the eUICC; and
when the API of the OS is invoked, determining (203), by the OS, based on an access control rule, whether the LPA module has a permission to access the eUICC or not, and sending, in response to the determination that the LPA module has the permission to access the eUICC, the information or command corresponding to the control instruction to the eUICC, such that the eUICC performs an operation based on the information or command.

2. The method of claim 1, further comprising:
acquiring, by the OS, the access control rule from the eUICC and storing the access control rule.

3. The method of claim 2, wherein acquiring, by the OS, the access control rule from the eUICC comprises:
sending, by the OS, a read request to the eUICC; and
receiving, by the OS, the access control rule returned from the eUICC.

4. The method of claim 2, further comprising:
after an Issuer Security Domain-Profile, ISD-P, corresponding to the LPA module is deactivated, clearing, by the OS, the stored access control rule.

5. The method of claim 2, further comprising:
when the access control rule stored by the eUICC is changed, acquiring, by the OS, a new access control rule from the eUICC, and updating the stored access control rule.

6. The method of claim 1, wherein when an interaction between a Subscription Manager-Data Preparation+, SM-DP+, or a service platform and the eUICC is implemented via the electronic device, the LPA module receives the control instruction; and
before invoking the API of the OS, the method further comprises:
acquiring, by the LPA module, the information or command corresponding to the control instruction from the SM-DP+ or the service platform.

7. The method of any one of claims 1 to 6, wherein the access control rule at least comprises verification information for the LPA module; and the verification information is used for verifying whether the LPA module has the permission to access the eUICC or not.

8. The method of claim 7, wherein the access control rule further comprises an access permission for the API; and before sending, in response to the determination that the LPA module has the permission to access the eUICC, the information or command corresponding to the control instruction to the eUICC, the method further comprises:
determining, by using the access permission for the API in the access control rule, whether the API invoked by the LPA module is allowed to be invoked or not, and sending, in response to the determination that the API invoked by the LPA module is allowed to be invoked, the information or command corresponding to the control instruction to the eUICC.

9. An electronic device comprising:
a Local Profile Assistant, LPA, module (41) located on an application layer of the electronic device, configured to receive a control instruction, wherein the control instruction is to indicate a control operation on an embedded Universal Integrated Circuit Card, eUICC; and invoke, in response to the control instruction, an Application Programming Interface, API, of an Operation System, OS, module (42), to send information or command corresponding to the control instruction to the eUICC; and
the OS module (42), configured to determine, when the own API is invoked, based on an access control rule, whether the LPA module (41) has a permission to access the eUICC or not, and send, in response to the determination that the LPA module (41) has the permission to access the eUICC, the information or command corresponding to the control instruction to the eUICC, such that the eUICC performs an operation based on the information or command.

10. The electronic device of claim 9, wherein the OS module (42) is further configured to acquire the access control rule from the eUICC and store the access control rule.

11. The electronic device of claim 10, wherein the OS module (42) is further configured to clear, after an Issuer Security Domain-Profile, ISD-P, corresponding to the LPA module (41) is deactivated, the stored access control rule.

12. The electronic device of claim 10, wherein the OS module (42) is further configured to acquire, in response to the access control rule stored by the eUICC is changed, a new access control rule from the eUICC, and update the stored access control rule.

13. The electronic device of claim 9, wherein when an interaction between a Subscription Manager-Data Preparation+, SM-DP+, or a service platform and the eUICC is implemented via the electronic device, the LPA module (41) receives the control instruction; and
the LPA module (41) is further configured to acquire the information or command corresponding to the control instruction from the SM-DP+ or the service platform.

14. The electronic device of any one of claims 9 to 13, wherein the access control rule at least comprises verification information for the LPA module (41); and the verification information is used for verifying whether the LPA module (41) has the permission to access the eUICC or not.

15. A computer storage medium having stored thereon a computer program, wherein the computer program implements the steps of the method of any one of claims 1 to 8 when being executed by a processor.

## Patentansprüche

1. Zugriffssteuerverfahren, angewendet auf ein elektronisches Gerät, umfassend:
Empfangen (201), einer Steueranweisung durch ein "Local Profile Assistant"-Modul (LPA-Modul), das sich auf einer Anwendungsschicht des elektronischen Geräts befindet, wobei die Steueranweisung einen Steuervorgang auf einer eingebetteten universellen integrierten Schaltkarte (eUICC) angeben soll;
Aufrufen (202), durch das LPA-Module, als Antwort auf die Steueranweisung, einer Anwendungsprogrammierschnittstelle (API) eines Betriebssystems (OS) des elektronischen Geräts, um eine Information oder einen Befehl entsprechend der Steueranweisung an die eUICC zu senden; und
wenn die API des OS aufgerufen wird, Bestimmen (203), durch das OS, basierend auf einer Zugriffssteuerregel, ob das LPA-Modul eine Berechtigung hat, auf die eUICC zuzugreifen oder nicht, und Senden, als Antwort auf die Bestimmung, dass das LPA-Modul die Berechtigung hat, auf die eUICC zuzugreifen, der Information oder des Befehls entsprechend der Steueranweisung an die eUICC, sodass die eUICC basierend auf der Information oder dem Befehl einen Vorgang durchführt.

2. Verfahren nach Anspruch 1, ferner umfassend:
Erhalten, durch das OS, der Zugriffssteuerregel von der eUICC und Speichern der Zugriffssteuerregel.

3. Verfahren nach Anspruch 2, wobei das Erhalten, durch das OS, der Zugriffssteuerregel von der eUICC Folgendes umfasst:
Senden, durch das OS, einer Leseanfrage an die eUICC; und
Empfangen, durch das OS, der von der eUICC zurückgesandten Zugriffssteuerregel.

4. Verfahren nach Anspruch 2, ferner umfassend:
nachdem ein "Issuer Security Domain Profile" (ISD-P), das dem LPA-Modul entspricht, deaktiviert wurde, Löschen, durch das OS, der gespeicherten Zugriffssteuerregel.

5. Verfahren nach Anspruch 2, ferner umfassend:
Erhalten, wenn die von der eUICC gespeicherte Zugriffssteuerregel geändert wird, durch das OS, einer neuen Zugriffssteuerregel von der eUICC und Aktualisieren der gespeicherten Zugriffssteuerregel.

6. Verfahren nach Anspruch 1, wobei, wenn eine Interaktion zwischen einer "Subscription Manager-Data Preparation+" (SM-DP+) oder einer Service-Plattform und der eUICC über das elektronische Gerät implementiert wird, das LPA-Modul die Steueranweisung empfängt; und
das Verfahren vor Aufrufen der API des OS ferner Folgendes umfasst:
Erhalten, durch das LPA-Modul, der Information oder des Befehls entsprechend der Steueranweisung von der SM-DP+ oder der Service-Plattform.

7. Verfahren nach einem der Ansprüche 1 bis 6, wobei die Zugriffssteuerregel zumindest eine Verifizierungsinformation für das LPA-Modul umfasst; und die Verifizierungsinformation zum Verifizieren, ob das LPA-Modul die Berechtigung hat, auf die eUICC zuzugreifen oder nicht, verwendet wird.

8. Verfahren nach Anspruch 7, wobei die Zugriffssteuerregel ferner eine Zugriffsberechtigung für die API umfasst; und vor dem Senden, als Antwort auf die Bestimmung, dass das LPA-Modul die Berechtigung hat, auf die eUICC zuzugreifen, der Information oder des Befehls entsprechend der Steueranweisung an die eUICC, das Verfahren ferner Folgendes umfasst:
Bestimmen, durch Verwenden der Zugriffsberechtigung für die API in der Zugriffssteuerregel, ob die von dem LPA-Modul aufgerufene API berechtigt ist, aufgerufen zu werden oder nicht, und Senden, als Antwort auf die Bestimmung, dass die von dem LPA-Modul aufgerufene API berechtigt ist, aufgerufen zu werden, der Information oder des Befehls entsprechend der Steueranweisung an die eUICC.

9. Elektronisches Gerät, umfassend:
ein "Local Profile Assistant"-Modul (LPA-Modul) (41), das sich auf einer Anwendungsschicht des elektronischen Geräts befindet und konfiguriert ist, um eine Steueranweisung zu empfangen, wobei die Steueranweisung einen Steuervorgang auf einer eingebetteten universellen integrierten Schaltkarte (eUICC) angeben soll; und als Antwort auf die Steueranweisung eine Anwendungsprogrammierschnittstelle (API) eines Betriebssystem-Moduls (OS-Moduls) (42) aufrufen soll, um eine Information oder einen Befehl entsprechend der Steueranweisung an die eUICC zu senden; und
das OS-Modul (42), das konfiguriert ist, um basierend auf einer Zugriffssteuerregel zu bestimmen, wenn die eigene API aufgerufen wird, ob das LPA-Modul (41) eine Berechtigung hat, auf die eUICC zuzugreifen oder nicht, und um als Antwort auf die Bestimmung, dass das LPA-Modul (41) die Berechtigung hat, auf die eUICC zuzugreifen, die Information oder den Befehl entsprechend der Steueranweisung an die eUICC zu senden, sodass die eUICC einen Vorgang durchführt, der auf der Information oder dem Befehl basiert.

10. Elektronisches Gerät nach Anspruch 9, wobei das OS-Modul (42) ferner konfiguriert ist, um die Zugriffssteuerregel von der eUICC zu erhalten und die Zugriffssteuerregel zu speichern.

11. Elektronisches Gerät nach Anspruch 10, wobei das OS-Modul (42) ferner konfiguriert ist, um die gespeicherte Zugriffssteuerregel zu löschen, nachdem ein "Issuer Security Domain Profile" (ISD-P), das dem LPA-Modul (41) entspricht, deaktiviert wurde.

12. Elektronisches Gerät nach Anspruch 10, wobei das OS-Modul (42) ferner konfiguriert ist, um als Antwort auf das Ändern der von der eUICC gespeicherten Zugriffssteuerregel eine neue Zugriffssteuerregel von der eUICC zu erhalten und die gespeicherte Zugriffssteuerregel zu aktualisieren.

13. Elektronisches Gerät nach Anspruch 9, wobei, wenn eine Interaktion zwischen einer "Subscription Manager-Data Preparation+" (SM-DP+) oder einer Service-Plattform und der eUICC über das elektronische Gerät implementiert wird, das LPA-Modul (41) die Steueranweisung empfängt; und
das LPA-Modul (41) ferner konfiguriert ist, um die Information oder den Befehl entsprechend der Steueranweisung von der SM-DP+ oder der Service-Plattform zu erhalten.

14. Elektronisches Gerät nach einem der Ansprüche 9 bis 13, wobei die Zugriffssteuerregel zumindest die Verifizierungsinformation für das LPA-Modul (41) umfasst; und die Verifizierungsinformation verwendet wird, um zu verifizieren, ob das LPA-Modul (41) die Berechtigung hat, auf die eUICC zuzugreifen oder nicht.

15. Computerspeichermedium, das ein darauf gespeichertes Computerprogramm hat, wobei das Computerprogramm die Schritte des Verfahrens nach einem der Ansprüche 1 bis 8 implementiert, wenn es durch einen Prozessor ausgeführt wird.

## Revendications

1. Procédé de contrôle d'accès, appliqué sur un dispositif électronique, comprenant :
la réception (201), par un module d'assistant de profil local, LPA, situé sur une couche d'application du dispositif électronique, une instruction de contrôle, dans lequel l'instruction de contrôle est destinée à indiquer une opération de contrôle sur une carte de circuit intégré universelle incorporée, eUICC ;
l'appel (202), par le module de LPA, en réponse à l'instruction de contrôle, à une interface de programmation d'application, API, d'un système d'exploitation, OS, du dispositif électronique pour qu'elle envoie des informations ou une commande correspondant à l'instruction de contrôle à l'eUICC ; et
lors de l'appel à l'API de l'OS, la détermination (203), par l'OS, sur la base d'une règle de contrôle d'accès, du fait que le module de LPA a une permission d'accéder à l'eUICC ou non, et l'envoi, en réponse à la détermination que le module de LPA a la permission d'accéder à l'eUICC, des informations ou de la commande correspondant à l'instruction de contrôle à l'eUICC, de telle sorte que l'eUICC réalise une opération sur la base des informations ou de la commande.

2. Procédé selon la revendication 1, comprenant en outre :
l'acquisition, par l'OS, de la règle de contrôle d'accès à partir de l'eUICC et le stockage de la règle de contrôle d'accès.

3. Procédé selon la revendication 2, dans lequel l'acquisition, par l'OS, de la règle de contrôle d'accès à partir de l'eUICC comprend :
l'envoi, par l'OS, d'une demande de lecture à l'eUICC ; et
la réception, par l'OS, de la règle de contrôle d'accès renvoyée de l'eUICC.

4. Procédé selon la revendication 2, comprenant en outre :
après qu'un domaine de sécurité d'émetteur-profil, ISD-P, correspondant au module de LPA est désactivé, l'effacement, par l'OS, de la règle de contrôle d'accès stockée.

5. Procédé selon la revendication 2, comprenant en outre :
lorsque la règle de contrôle d'accès stockée par l'eUICC est changée, l'acquisition, par l'OS, d'une nouvelle règle de contrôle d'accès à partir de l'eUICC, et la mise à jour de la règle de contrôle d'accès stockée.

6. Procédé selon la revendication 1, dans lequel lorsqu'une interaction entre un gestionnaire d'abonnement-préparation de données+, SM-DP+, ou une plate-forme de service et l'eUICC est implémentée par l'intermédiaire du dispositif électronique, le module de LPA reçoit l'instruction de contrôle ; et
avant l'appel à l'API de l'OS, le procédé comprend en outre :
l'acquisition, par le module de LPA, des informations ou de la commande correspondant à l'instruction de contrôle à partir du SM-DP+ ou de la plate-forme de service.

7. Procédé selon l'une quelconque des revendications 1 à 6, dans lequel la règle de contrôle d'accès comprend au moins des informations de vérification pour le module de LPA ; et les informations de vérification sont utilisées pour vérifier le fait que le module de LPA a la permission d'accéder à l'eUICC ou non.

8. Procédé selon la revendication 7, dans lequel la règle de contrôle d'accès comprend en outre une permission d'accès pour l'API ; et avant l'envoi, en réponse à la détermination que le module de LPA a la permission d'accéder à l'eUICC, des informations ou de la commande correspondant à l'instruction de contrôle à l'eUICC, le procédé comprend en outre :
la détermination, en utilisant la permission d'accès pour l'API dans la règle de contrôle d'accès, du fait que l'API ayant fait l'objet de l'appel par le module de LPA est permis de faire l'objet d'un appel ou non, et l'envoi, en réponse à la détermination que l'API ayant fait l'objet de l'appel par le module de LPA est permis de faire l'objet d'un appel, des informations ou de la commande correspondant à l'instruction de contrôle to l'eUICC.

9. Dispositif électronique, comprenant :
un module d'assistant de profil local, LPA, (41) situé sur une couche d'application du dispositif électronique, configuré pour recevoir une instruction de contrôle, dans lequel l'instruction de contrôle est destinée à indiquer une opération de contrôle sur une carte de circuit intégré universelle incorporée, eUICC ; et faire l'appel, en réponse à l'instruction de contrôle, à une interface de programmation d'application, API, d'un module de système d'exploitation, OS, (42), pour qu'elle envoie des informations ou une commande correspondant à l'instruction de contrôle à l'eUICC ; et
le module d'OS (42) étant configuré pour déterminer, lorsque l'API propre fait l'objet de l'appel, sur la base d'une règle de contrôle d'accès, le fait que le module de LPA (41) a une permission d'accéder à l'eUICC ou non, et envoyer, en réponse à la détermination que le module de LPA (41) a la permission d'accéder à l'eUICC, les informations ou la commande correspondant à l'instruction de contrôle à l'eUICC, de telle sorte que l'eUICC réalise une opération sur la base des informations ou de la commande.

10. Dispositif électronique selon la revendication 9, dans lequel le module d'OS (42) est en outre configuré pour acquérir la règle de contrôle d'accès à partir de l'eUICC et stocker la règle de contrôle d'accès.

11. Dispositif électronique selon la revendication 10, dans lequel le module d'OS (42) est en outre configuré pour effacer, après qu'un domaine de sécurité d'émetteur-profil, ISD-P, correspondant au module de LPA (41) est désactivé, la règle de contrôle d'accès stockée.

12. Dispositif électronique selon la revendication 10, dans lequel le module d'OS (42) est en outre configuré pour acquérir, en réponse au fait que la règle de contrôle d'accès stockée par l'eUICC est changée, une nouvelle règle de contrôle d'accès à partir de l'eUICC, et mettre à jour la règle de contrôle d'accès stockée.

13. Dispositif électronique selon la revendication 9, dans lequel lorsqu'une interaction entre un gestionnaire d'abonnement-préparation de données+, SM-DP+, ou une plate-forme de service et l'eUICC est implémentée par l'intermédiaire du dispositif électronique, le module de LPA (41) reçoit l'instruction de contrôle ; et
le module de LPA (41) est en outre configuré pour acquérir les informations ou commande correspondant à l'instruction de contrôle à partir du SM-DP+ ou de la plate-forme de service.

14. Dispositif électronique selon l'une quelconque des revendications 9 à 13, dans lequel la règle de contrôle d'accès comprend au moins des informations de vérification pour le module de LPA (41) ; et les informations de vérification sont utilisées pour vérifier le fait que le module de LPA (41) a la permission d'accéder à l'eUICC ou non.

15. Support de stockage d'ordinateur ayant, stocké sur celle-ci, un programme d'ordinateur, dans lequel le programme d'ordinateur implémente les étapes du procédé selon l'une quelconque des revendications 1 à 8 lorsqu'il est exécuté par un processeur.
